# EUROPEAN PATENT SPECIFICATION

(11) **EP 1 402 762 B1**
(45) Date of publication and mention of the grant of the patent: **25.09.2013**
(21) Application number: 02712622.6
(22) Date of filing: 28.03.2002
(51) Int. Cl.: G01N 21/71, G01N 21/73, H05H 1/42, H01J 49/04, H01J 49/10, H05H 1/30

(54) **PLASMA TORCH**
PLASMABRENNER
TORCHE A PLASMA

(30) Priority: 03.07.2001 AU PR016099; 12.07.2001 AU PR016347
(43) Date of publication of application: 31.03.2004
(73) Proprietor: Agilent Technologies Australia (M) Pty Ltd, Mulgrave, VIC 3170 (AU)
(72) Inventor: WISEMAN, Alan, Geoffrey, Wheelers Hill, Victoria 3150 (AU)
(74) Representative: Foster, Mark Charles
(86) International application number: PCT/AU2002/000386
(87) International publication number: WO 2003/005780

(56) References cited:
- EP-A- 0 792 091
- WO-A-93/12634
- WO-A1-98/29896
- GB-A- 2 158 608
- JP-A- 4 026 099
- US-A- 5 233 156
- US-A- 6 166 379
- US-B1- 6 184 982
- DATABASE WPI Week 199951, Derwent Publications Ltd., London, GB; Class J04, AN 1999-594470, XP002976016 & JP 11 258 163 A (SHIMADZU CORP) 24 September 1999

## Description

### Technical Field

This invention relates to a plasma torch for spectrochemical analysis, for example for producing an inductively coupled plasma or a microwave induced plasma.

### Background of the Invention

A common requirement in spectrochemical analysis with inductively coupled or microwave induced plasma torches is to analyse liquid samples having relatively high concentrations of dissolved solids. In extreme cases the concentrations of such samples might approach the saturation point of one of the dissolved components. Liquid samples are usually introduced a plasma torch as aerosols produced by a nebulizer. Attempts to analyse highly concentrated samples can result in salts coming out of solution as the nebulised aerosol is generated and as it is transported through the torch. Salt particles are often deposited in the nebulizer or in the torch, ultimately causing blockages that require the analysis to be stopped and the apparatus to be disassembled and cleaned. This wastes valuable time. Nebulisers that are resistant to obstruction by salts are known in the art, but obstruction of the plasma torch has containued to cause difficulty.

An object of the present invention is to provide a torch for producing a plasma for use in spectrochemical analysis that is resistant to obstruction by salts deposited from samples containing high levels of dissolved solids.

### Summary of the Invention

The invention provides a plasma torch as defined in claim 1.

As the aerosol travels from the inlet of the tube of the torch (typically 4 to 8 mm ID) to the outlet of the tube (typically 0.8 - 3 mm ID) the velocity of the aerosol increases. This change in velocity (and associated changes in pressure) ought to occur as smoothly as possible, such that turbulence and pressure changes are minimized. The invention meets the stated object by providing a gradual reduction in cross-sectional area between the inlet and the outlet and by providing a smooth transition between the said tapered portion and any parallel portions at each end. The taper may be constant (that is, linear), exponential or of any other shape that can provide an appropriately smooth pathway of decreasing cross-sectional area, blending smoothly into any parallel portions. Such a shape is produced naturally when glass or quartz tube is heated and stretched to produce the taper. If the tube were to be manufactured from ceramic material (either by machining and sintering or moulding), or by shrinking quartz onto a mandrel, care would need to be taken in machining, or in the design and construction of the mould or mandrel, to avoid sharp or abrupt transitions between the tapered portion and any adjacent parallel portions. The length of the tapered portion may be at least five times the internal diameter of the inlet of the tube and is advantageously from five to ten times the internal diameter of the inlet of the tube. Such a design eliminates relatively sudden transitions in the cross sectional area of the tube of the plasma torch, as have been provided in prior art torches, at which salts are preferentially prone to deposit.

Any turbulence and changes in pressure that may be associated with the transition between a parallel portion of tube at the outlet end and the said tapered portion should occur at a location sufficiently remote from the plasma to be largely unaffected by the heat radiated from the plasma or conducted down the tube from the plasma. This can be achieved in the invention by ensuring that the final change in internal diameter occurs at a distance of 40 to 50 mm from the outlet end of the tube. The known relatively sudden transition in cross-sectional area of a tube in a prior art torch is typically located near the outlet end of the tube and is thus nearby the heat of the plasma. The invention reduces the influence of this factor given the tapered portion provides a gradual and smooth transition between the inlet and outlet cross sections and also that it may be located as remotely as possible from the heat of the plasma, for example, the tapered portion may commence at the inlet.

For a better understanding of the invention and to show how it may be carried into effect, preferred embodiments thereof will now be described, by way of non-limiting example, with reference to the accompanying drawings.

### Brief Description of the Drawings

Fig.1 schematically shows a typical prior art inductively coupled plasma torch.
Fig. 2 illustrates a known modification for a tube of the torch of Fig. 1 for conveying a flow of a gas carrying sample aerosol.
Fig. 3 illustrates an embodiment of a tube for conveying a flow of a gas carrying sample aerosol for a torch according to the invention.
Fig. 4 illustrates a second embodiment of a tube for a torch according to the invention.
Fig. 5 schematically shows a torch according to an embodiment of the invention.
Fig. 6 is a graph illustrating spectrochemical analysis results from a plasma sustained by a plasma torch according to an embodiment of the invention.
Fig. 7 is a graph illustrating performance of a plasma torch according to an embodiment of the invention in comparison to a prior art plasma torch.

### Detailed Description

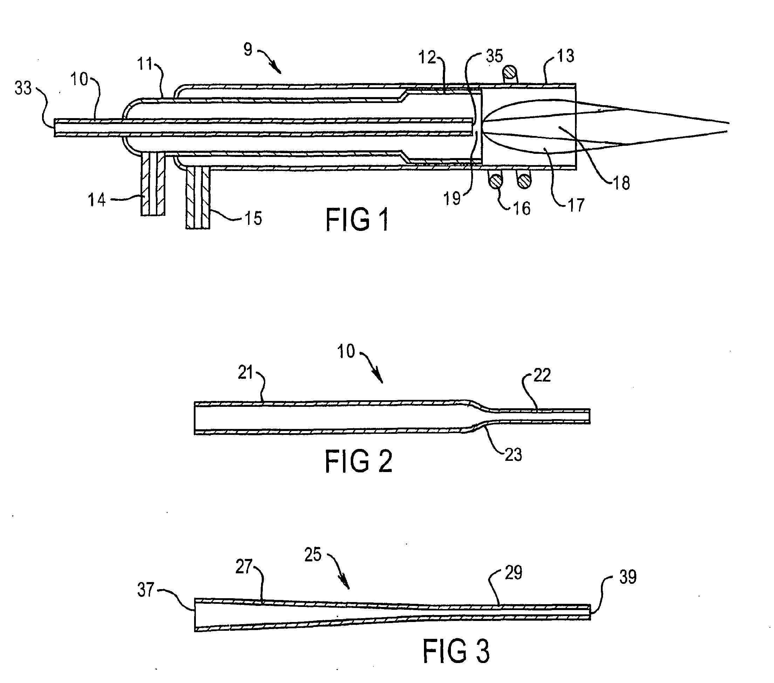

A typical inductively coupled plasma torch 9 is shown in Figure 1. It consists of three concentric tubes, 10, 11 and 13, usually made out of fused quartz. Figure 1 shows a torch 9 in which the three tubes are permanently fused together, but it is known in the art to provide a mechanical arrangement whereby the three tubes 10, 11 and 13 are held in their required positions and wherein one or more of the tubes 10, 11 and 13 can be removed and replaced. Such an arrangement is called a demountable torch.

Tube 13 is the outermost of the three tubes. Tube 11 is the intermediate tube and may be provided with a portion 12 of larger diameter, which may in some designs extend over the entire length of tube 11. The purpose of portion 12 is to provide a narrow annular gap between tubes 11 and 13 for the passage of a plasma forming gas (typically argon) that is supplied though a gas inlet 15. The narrow gap imparts a desirably high velocity to the gas. Radiofrequency induction coil 16 is supplied with radiofrequency current from a power supply (not shown). Plasma 17 is initiated by momentarily applying a high-voltage spark (by means known in the art and not shown) to the gas entering through gas inlet 15. Plasma 17 is sustained by inductive coupling of the radiofrequency electromagnetic field generated by coil 16 with plasma 17, as is known in the art. A small flow of gas is supplied to tube 11-12 through gas inlet 14. This serves to keep plasma 17 at an appropriate distance from the nearby ends 19 of tubes 11-12 and 10, so that the ends 19 of tubes 11-12 and 10 do not overheat.

For a microwave induced plasma instead of an inductively coupled plasma, the coil 16 would not be present and the torch 9 would be suitably associated with means for applying a microwave electromagnetic field to the torch 9, for example the torch 9 may be appropriately located through a resonant cavity to which the microwave energy is supplied.

A flow of gas carrying sample aerosol (not shown) for analysis is introduced by known means (not shown) into the end of tube 10 remote from the plasma (i.e. the tube's inlet 33). The aerosol-laden gas emerges from the other end (i.e. the outlet 35) of tube 10 adjacent to plasma 17 with sufficient velocity to pass through plasma 17. The passage through plasma 17 of gas and aerosol emerging from tube 10 forms a central channel 18 in plasma 17. Aerosol droplets passing from the outlet 35 of tube 10 into central channel 18 are progressively dried, melted, and vaporised by the heat of plasma 17. The vaporised sample is subsequently converted to atoms and ions by the heat of plasma 17, and these atoms and ions are excited to emit radiation by the heat of plasma 17. Radiation emitted by excited atoms and ions can be used for spectrochemical analysis by optical emission spectrometry, as is known in the art. Furthermore, ions in central channel 18 can be used for analysis by mass spectrometry, as is also known in the art.

In order that aerosol emerging from outlet 35 of tube 10 may effectively penetrate plasma 17 and form central channel 18, it is known to provide a narrow parallel-walled path through at least a portion of tube 10 adjacent to its outlet 35, so that the flow therethrough is substantially laminar. In Figure 1 such a narrow parallel-walled path is shown extending the entire length of tube 10. It is also known, however, that such a long, narrow passage or capillary is readily obstructed by salts deposited from the aerosol when aerosols generated from samples containing high levels of dissolved solids are introduced into tube 10. Accordingly, it is also known to provide a tube as shown in Figure 2, which has a wide parallel-sided portion 21, extending for a substantial length of the tube from the end through which the aerosol enters, and a narrow, parallel-sided short portion 22, extending from the end through which the aerosol outlet ends. Portions 21 and 22 are joined by a short tapered portion 23. A tube 10 according to Figure 2 is more resistant to blockage by deposited salts than is a tube 10 as shown in Figure 1, in which the narrow parallel-side portion extends the entire length of tube 10. None the less, a torch equipped with a tube 10 according to Figure 2 is still subject to obstruction by deposited salts. The deposition of salts is particularly evident in the short tapered portion 23.

Having observed that salt deposited preferentially in the short tapered portion 23, the inventor decided to make the tapered portion as remote as possible from the heat of the plasma (to reduce the temperature of that portion) and also to make the transition of flow into the narrow parallel-walled portion as gradual as possible. This led to the design of a tube 25 as shown in Figure 3, which has a tapered portion 27 of greatly increased length compared to section 23 of tube 10 of Fig. 2. The tube 25 is substantially constantly tapered along at least a substantial portion of its length such that its cross-sectional area gradually and smoothly reduces between its inlet 37 and its outlet 39 along said at least a substantial portion of its length Tube 25 includes a narrow parallel sided portion 29 similar to portion 22 of tube 10 of Fig. 2. It is probable, but not yet experimentally verified, that the tapered portion 27 could extend over the entire length of tube 25, the taper at the outlet end 39 approximating the narrow parallel-sided portion 29, such that the flow of sample aerosol laden gas within tube 25 at outlet 39 is substantially laminar.

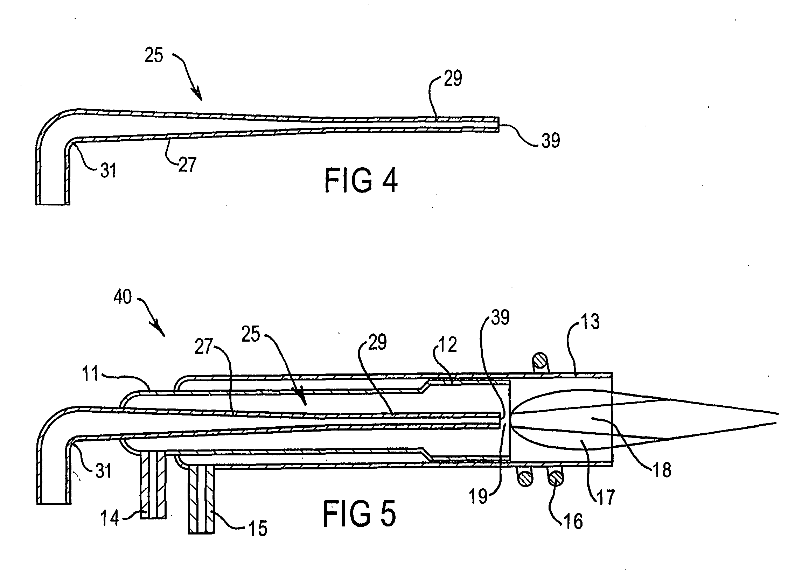

Figure 4 shows an embodiment of a tube 25 of the invention wherein aerosol is introduced into tube 25 through a smoothly curved tube 31 that is continuous with tapered portion 27. Curved tube 31 is advantageous for the particular spectrometer in which the invention was tested. In another spectrometer, for example one in which the torch is mounted vertically, curved tube 31 might not be required.

Figure 5 shows an inductively coupled plasma torch 40 equipped with a central tube 25 according to the invention. Components of this torch that are the same as in torch 9 of Fig. 1 have been accorded the same reference numeral. Note that a torch 40 according to the invention in its broadest form involves provision of the three tubes 25, 11 and 13 without the radio frequency induction coil 16.

To assess the performance of the tube 25 of the invention, tests were carried out in which a solution containing 250 grams of sodium chloride per litre was nebulised continuously into either an operating prior art torch having a tube 10 according to Figure 2 or into an operating torch having a tube 25 according to this invention (as in Figure 4). The sample introduction system and the operating conditions of the inductively coupled plasma were the same in each of the tests and were typical of those that would be used in normal operation of an inductively coupled plasma atomic emission spectrometer. The prior art torch was blocked within 30 minutes, but the torch 40 according to the invention was still operational after 24 hours. Observation of the blocking process revealed that salt built up continuously in the prior art torch, leading to blockage. In the torch according to the invention, salt was deposited in the curved portion 31 and in the wide part of the tapering portion 27 of tube 25 just after curved portion 31. This deposited salt was in the form of a fine granular material, some of which was from time to time blown right through tube 25 and into central channel 18. A torch according to the invention is thus to some extent self-clearing. It is emphasised that continuous introduction of sample is a very severe test. In real analytical practice, the system would be rinsed between samples by aspirating a blank solution and this would prolong the useful analytical time considerably.

Example dimensions for a tube 25 are: length approximately 90 mm, inlet diameter 5 mm, outlet diameter 2.3 mm, length of tapered portion approximately 40 mm extending to approximately 45 mm from the outlet.

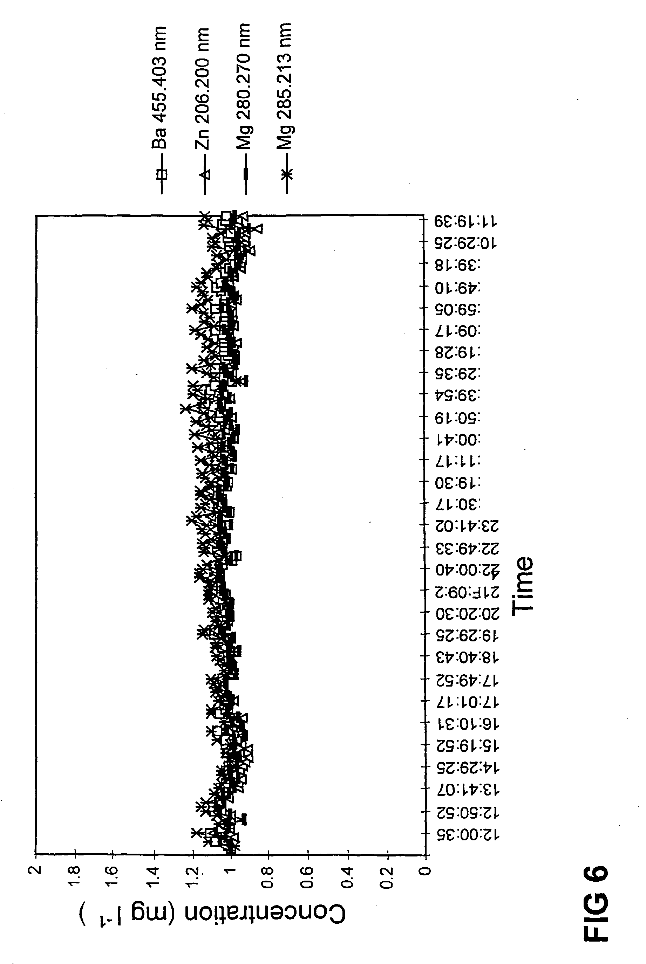

Further test results are illustrated in Figure 6 which shows a plot of reported test element concentration versus time for a solution containing 1 milligram of each of three test elements (barium, zinc and magnesium) and 250 grams of sodium chloride per litre of solution. The solution was introduced continuously into an inductively coupled plasma sustained in a torch having a tube 25 (as in Fig. 4) according to the invention while the concentration of each test element was monitored on the basis of the measured intensity of the emission lines indicated in the Figure (that is, Ba 455.403 nm, Zn 206.200 nm, Mg 280.270 nm, Mg 285.213 nm). These results show that the torch was operating satisfactorily after 24 hours' continuous operation.

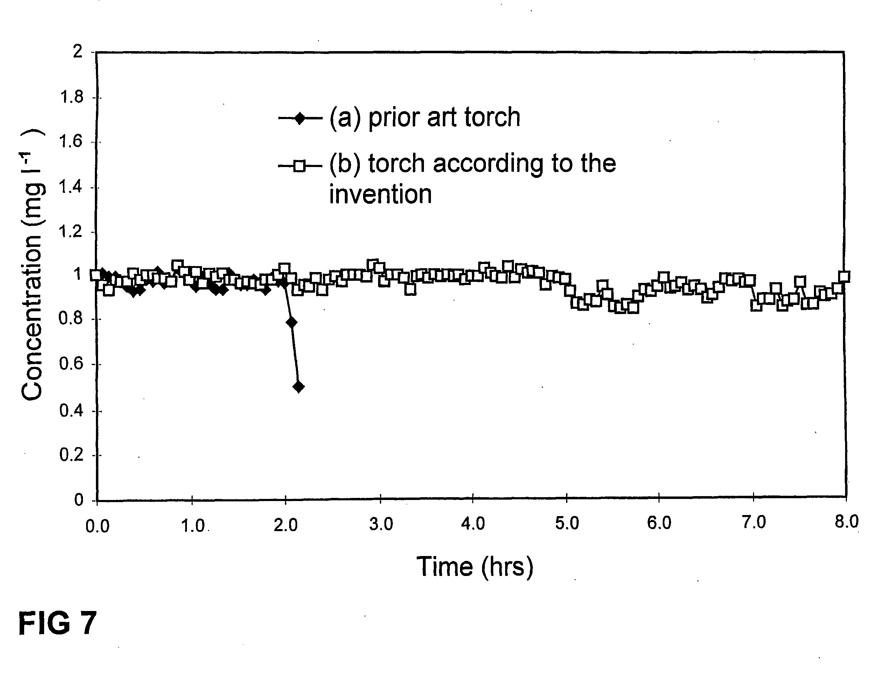

Figure 7 shows a plot of reported manganese concentration versus time for a solution containing one milligram of manganese and 250 grams of sodium chloride per litre of solution. The solution was introduced continuously into an inductively coupled plasma sustained (a) in a prior art torch and then (b) in a torch having a tube 25 (as in Fig. 4) according to the invention while the concentration of manganese was monitored on the basis of the measured intensity of the 257.610 nm emission line. The same sample introduction system was used with each torch. The prior art torch blocked after two hours, but the torch according to the invention was still operating satisfactorily after 8 hours' continuous operation.

Table 1 shows the detection limit for a range of elements in dilute nitric acid solution (a) in a prior art torch and (b) in a torch according to the invention. This solution is easily handled by the prior art torch, yielding state-of-the-art detection limits. Similar detection limits were obtained with the torch according to the invention.

**Table 1**

| Detection Limit, micrograms/litre | | | |
|---|---|---|---|
| Element | Wavelength (nm) | (a) prior art torch | (b) torch according to the invention |
| Al | 167.019 | 0.30 | 0.40 |
| As | 188.980 | 3.4 | 3.6 |
| Ba | 455.403 | 0.12 | 0.13 |
| Be | 234.861 | 0.05 | 0.05 |
| Ca | 396.847 | 0.03 | 0.03 |
| Cd | 214.439 | 0.17 | 0.14 |
| Cu | 327.396 | 0.67 | 0.64 |
| Fe | 238.204 | 0.24 | 0.29 |
| Mg | 279.553 | 0.016 | 0.013 |
| Mn | 257.610 | 0.05 | 0.057 |
| Mo | 202.032 | 0.58 | 0.56 |
| Ni | 231.604 | 0.88 | 1.0 |
| Pb | 220.353 | 2.0 | 2.3 |
| Se | 196.026 | 4.9 | 6.4 |
| Zn | 213.857 | 0.14 | 0.15 |

Table 2 shows the detection limit for a range of elements in a solution of 250 grams of sodium chloride per litre in dilute nitric acid, measured with a torch according to the invention. This solution rapidly blocks the prior-art torch (Figure 7), but a torch according to the invention yields stable signals for prolonged periods (Figure 6) and also provides satisfactorily low detection limits.

**Table 2**

| Element | Wavelength (nm) | Detection Limit, micrograms/litre |
|---|---|---|
| Al | 167.019 | 1.5 |
| As | 188.980 | 7.5 |
| Ba | 455.403 | 0.40 |
| Be | 234.861 | 0.30 |
| Ca | 396.847 | 0.20 |
| Cd | 214.439 | 0.90 |
| Co | 238.892 | 2.0 |
| Cr | 267.716 | 1.0 |
| Cu | 327.396 | 3.0 |
| Fe | 259.94 | 6.0 |
| Mg | 279.553 | 0.20 |
| Mn | 257.610 | 0.20 |
| Pb | 220.353 | 11 |
| Ti | 334.941 | 0.90 |
| V | 292.401 | 1.5 |
| Zn | 213.857 | 1.0 |

The discussion herein of the background to the invention and what is known is included to explain the context of the invention. This is not to be taken as an admission that any of the matters referred to were part of the common general knowledge in Australia as at the priority date of this application.

The invention described herein is susceptible to variations, modifications and/or additions other than those specifically described and it is to be understood that the invention includes all such variations, modifications and/or additions that fall within the scope of the following claims.

## Claims

1. A plasma torch (40) for introducing a sample into a plasma (17) produced in the torch for spectrochemical analysis of the sample, wherein the plasma torch is for aerosol samples having relatively high salt concentrations, the plasma torch including
a tube (25) for conveying a flow of a gas carrying the aerosol sample to a plasma (17) produced in the torch by an electomagnetic field, the tube (25) having an inlet (31) and an outlet (39) of smaller size than the inlet, and being shaped to deliver a substantially laminar flow of the aerosol-laden gas at the outlet for penetrating the plasma, wherein the tube (25) is tapered (27) along substantially its whole length such that its cross-sectional area gradually and smoothly reduces towards its outlet along said substantially whole length, the arrangement being such that the tube (25) is resistant to obstruction by salts deposited by the aerosol sample containing relatively high salt concentrations.

2. A torch (40) as claimed in claim 1 wherein the tube (25) is tapered (27) along its length for a distance that is at least five times the internal diameter of the inlet of the tube.

3. A torch (40) as claimed in claim 2 wherein the tube (25) is tapered (27) along its length for a distance that is from five to ten times the internal diameter of the inlet of the tube.

4. A torch (40) as claimed in any one of claims 1 to 3 wherein the tube (25) includes a parallel walled portion (29) extending to the outlet (39), wherein the tapered portion (27) of the tube smoothly blends into the parallel walled portion.

5. A torch (40) as claimed in any one of claims 1 to 4 wherein the tapered portion (27) of the tube commences at the inlet.

6. A torch (40) as claimed in any one of claims 1 to 4 wherein the tube (25) includes an inlet portion (31) that is smoothly curved through an angle of about 90° and smoothly bends into the tapered portion (27).

## Patentansprüche

1. Ein Plasmabrenner (40) zum Einführen einer Probe in ein Plasma (17), welches in dem Brenner erzeugt wird, für eine spektrochemische Analyse der Probe, wobei der Plasmabrenner für Aerosolproben ist, welche relativ hohe Salzkonzentrationen haben, wobei der Plasmabrenner beinhaltet
eine Röhre (25) zum Befördern eines Flusses eines Gases, welches die Aerosolprobe trägt, zu einem Plasma (17), welches in dem Brenner mittels eines elektromagnetischen Feldes erzeugt wird, wobei die Röhre (25) einen Einlass (31) und einen Auslass (39) von einer kleineren Größe als der Einlass hat und geformt ist, um einen im Wesentlichen laminaren Fluss des Aerosol-beaufschlagten Gases an den Auslass zum Eindringen in das Plasma zuzuführen, wobei die Röhre (25) im Wesentlichen entlang ihrer gesamten Länge verjüngt (27) ist, so dass ihre Querschnittsfläche sich in Richtung ihres Auslasses im Wesentlichen entlang der gesamten Länge graduell und gleichmäßig reduziert, wobei die Anordnung so ist, dass die Röhre (25) resistent gegen eine Verstopfung durch Salz ist, welches mittels der Aerosolprobe abgelagert wird, welche relativ hohe Salzkonzentrationen enthält.

2. Ein Brenner (40) wie in Anspruch 1 beansprucht, wobei die Röhre entlang ihrer Länge für eine Distanz verjüngt (27) ist, welche zumindest fünfmal der interne Durchmesser des Einlasses der Röhre ist.

3. Ein Brenner (40) wie in Anspruch 2 beansprucht, wobei die Röhre entlang ihrer Länge für eine Distanz verjüngt (27) ist, welche von fünf- bis zehnmal der interne Durchmesser des Einlasses der Röhre ist.

4. Ein Brenner (40) wie in irgendeinem der Ansprüche 1 bis 3 beansprucht, wobei die Röhre (25) einen parallel gewandeten Abschnitt (29) beinhaltet, welcher sich zu dem Auslass (39) erstreckt, wobei sich der verjüngte Abschnitt (27) der Röhre (25) in den parallel gewandeten Abschnitt gleichmäßig einfügt.

5. Ein Brenner (40) wie in irgendeinem der Ansprüche 1 bis 4 beansprucht, wobei der verjüngte Abschnitt (27) der Röhre an dem Einlass beginnt.

6. Ein Brenner (40) wie in irgendeinem der Ansprüche 1 bis 4 beansprucht, wobei die Röhre (25) einen Einlassabschnitt (31) beinhaltet, welcher über einen Winkel von ungefähr 90° gleichmäßig gekrümmt ist und gleichmäßig in den verjüngten Anschnitt (27) abbiegt.

## Revendications

1. Torche à plasma (40) pour introduire un échantillon dans un plasma (17) produit dans la torche en vue d'une analyse spectrochimique de l'échantillon, la torche à plasma étant destinée à des échantillons aérosols présentant des concentrations en sels relativement élevées, la torche à plasma comprenant
un tube (25) pour acheminer le flux d'un gaz transportant l'échantillon d'aérosol vers un plasma (17) produit dans la torche par un champ électromagnétique, le tube (25) comprenant un orifice d'entrée (31) et un orifice de sortie (39) plus petit que l'orifice d'entrée et étant formé de façon à fournir un flux essentiellement laminaire du gaz chargé d'aérosol au niveau de l'orifice de sortie pour pénétrer le plasma, le tube (25) étant effilé (27) essentiellement sur toute sa longueur de sorte que son aire en coupe transversale diminue régulièrement et graduellement vers son orifice de sortie sur l'ensemble de ladite longueur, la disposition étant telle que le tube (25) est résistant à une obstruction résultant de sels déposés par l'échantillon d'aérosol contenant des concentrations en sels relativement élevées.

2. Torche (40) selon la revendication 1, le tube (25) étant effilé (27) sur toute sa longueur sur une distance égale à au moins cinq fois le diamètre interne de l'orifice d'entrée du tube.

3. Torche (40) selon la revendication 2, le tube (25) étant effilé (27) sur toute sa longueur sur une distance allant de cinq à dix fois le diamètre interne de l'orifice d'entrée du tube.

4. Torche (40) selon l'une quelconque des revendications 1 à 3, le tube (25) comprenant une partie close parallèle (29) s'étendant jusqu'à l'orifice de sortie (39), la partie effilée (27) du tube fusionnant régulièrement avec l'intérieur de la partie close parallèle.

5. Torche (40) selon l'une quelconque des revendications 1 à 4, la partie effilée (27) du tube commençant à partir de l'orifice d'entrée.

6. Torche (40) selon l'une quelconque des revendications 1 à 4, le tube (25) comprenant une partie d'entrée (31) qui est régulièrement courbée selon un angle d'environ 90° et qui s'incline régulièrement à l'intérieur de la partie effilée (27).
